# EUROPÄISCHE PATENTSCHRIFT

(11) **EP 0 692 308 B1**
(45) Veröffentlichungstag und Bekanntmachung des Hinweises auf die Patenterteilung: **19.09.2001**
(21) Anmeldenummer: 95110904.0
(22) Anmeldetag: 12.07.1995
(51) Int. Cl.: B01L 9/00

(54) **Verpackungssystem für Flüssigreagenzien**
Packaging system for liquid reagents
Système d'emballage pour réactifs liquides

(30) Priorität: 16.07.1994 DE 4425277
(43) Veröffentlichungstag der Anmeldung: 17.01.1996
(73) Patentinhaber: Roche Diagnostics GmbH, 68298 Mannheim (DE)
(72) Erfinder: Sattler, Stephan, D-82380 Peissenberg (DE); Wohland, Albert, D-68519 Viernheim (DE); Erb, Hermann, D-67136 Fussgönnheim (DE)

(56) Entgegenhaltungen:
- EP-A- 0 290 019
- EP-A- 0 517 092
- WO-A-93/01739
- DE-A- 4 411 188
- US-A- 3 630 350
- US-A- 5 322 668

## Beschreibung

Die vorliegende Erfindung betrifft ein Verpackungssystem für Flüssigreagenzien, beinhaltend ein oder mehrere Gefäße mit einem Haltebereich sowie einen Verschlußbereich und eine Aufsteckplatte mit einer der Zahl der Gefäße entsprechenden Zahl von Ausnehmungen, wobei die Ausnehmungen in der Aufsteckplatte in Größe und Form im wesentlichen dem Querschnitt der Haltebereiche entsprechen, so daß eine eindeutige Orientierung der Gefäße zueinander und zur Aufsteckplatte gewährleistet ist.

Verpackungssysteme für Flüssigreagenzien werden in erster Linie in der klinischen Analytik benötigt, da hier eine Vielzahl von Flüssigkeitsgefäßen manuell und maschinell gehandhabt werden müssen.

Im Stand der Technik sind Verpackungssysteme für Flüssigreagenzien aus US 4,849,177 und WO 93/01739 bekannt. In dem US-Patent US 4,849,177 wird ein Behältnis beschrieben, das mehrere Vertiefungen aufweist, in die Reagenzbehälter eingestellt werden können. Das Behältnis umfaßt die Gefäße an ihrem Boden und an ihren Umfangsflächen. Aufgrund der Form der Vertiefungen ist das Behältnis für Gefäße mit kreisrundem Querschnitt ausgelegt.

Die internationale Anmeldung WO 93/01739 beschreibt ebenfalls ein Behältnis, in das die Gefäße eingestellt werden. Zur Verwendung des beschriebenen Verpackungssystemes werden Gefäße in das Behältnis eingestellt und eine Abdeckplatte aufgesetzt. An der Unterseite der Abdeckplatte befinden sich Zylinder, die über die Hälse der Reagenzgefäße gestülpt werden und so zu einer Positionierung der Reagenzgefäße in dem Behältnis führen.

Aus der US 5,322,668 ist ferner ein System zur Verpackung von Flüssigkeiten bekannt, bei dem mehrere Gefäße, die einen Haltebereich besitzen, durch eine Aufsteckplatte und einen Halter zusammengefaßt werden, um eine gemeinsame Handhabung der Gefäße zu ermöglichen. Die Gefäße weisen einen kreisrunden Haltebereich auf, der von der Aufsteckplatte gehaltert wird. Durch dieses System wird keine eindeutige Orientierung der Gefäße zueinander oder zur Aufsteckplatte erzielt.

In der EP A 0 290 019 wird ein Verpackungssystem offenbart, bei dem ebenfalls mehrere Gefäße durch eine Platte mit Ausnehmungen zusammengefügt werden, indem die Gefäße in ihrem Halsbereich durch die Halteplatte gehaltert werden. Die Gefäße sind in dem Bereich der gehaltert wird, kreisrund, so daß eine eindeutige Orientierung zueinander und zu der Halteplatte nicht gewährleistet werden kann.

Aufgabe der Erfindung war es, die Nachteile des Standes der Technik zu überwinden und ein Zusammenfügen von Reagenzgefäßen zu ermöglichen, das materialsparend und kostengünstig ist. Weiterhin war es Aufgabe der Erfindung, dem Benutzer einfache Kombinationen zu ermöglichen und ein System vorzuschlagen, das einen schnellen und einfachen Austausch bzw. die Neukombination von Flüssigreagenzien gestattet. Insbesondere war es Aufgabe der Erfindung, ein System vorzuschlagen, das eine definierte Orientierung der Gefäße gewährleistet.

Die vorliegende Erfindung schlägt ein Verpackungssystem für Flüssigreagenzien vor, das ein oder mehrere Gefäße mit einem Haltebereich sowie einem Verschlußbereich und eine Aufsteckplatte mit einer der Zahl der Gefäße entsprechenden Zahl von Ausnehmungen beinhaltet, wobei die Ausnehmungen in der Aufsteckplatte in Größe und Form im wesentlichen dem Querschnitt der Haltebereiche entsprechen.

Die Erfindung befaßt sich mit der Verpackung von Flüssigreagenzien. Insbesondere in der klinischen Analytik stellt sich im Zusammenhang mit Analyseautomaten die Aufgabe, eine Vielzahl unterschiedlicher Reagenzgefäße sicher zu handhaben. Dies bedeutet, daß die Gefäße im Analysenautomaten sicher transportiert und positioniert werden müssen. Es muß weiterhin gewährleistet sein, daß die Gefäße anhand einer Kennzeichnung identifiziert werden können. Ermöglicht bzw. erleichtert wird die Gewährleistung der- genannten Anforderung dadurch, daß einzelne Gefäße zu Verbänden aus zwei oder mehr Gefäßen zusammengeschlossen werden. Bei der vorliegenden Erfindung geschieht dies dadurch, daß auf die Gefäße eine Aufsteckplatte aufgesteckt wird, die die Gefäße in einer definierten Anordnung zueinander haltert.

Das Gebiet der klinischen Chemie stellt eine Reihe von Anforderungen an die verwendeten Geräte bzw. Reagenzien, so daß sich Anforderungen an die verwendeten Geräte ergeben, die von Anforderungen z. B. im Lebensmittelbereich stark verschieden sind. Die genannten Flüssigkeitsreagenzien besitzen eine hochkomplexe Zusammensetzung, die herstellungsbedingt schwanken kann. Weiterhin besitzen die Flüssigkeitsreagenzien in der Regel eine begrenzte Haltbarkeitsdauer. Aus den genannten Gründen ergibt sich die Notwendigkeit, die Flüssigreagenzien mit einer Identitätsnummer zu versehen, herstellungsbedingte Angaben auf dem Gefäß zu markieren und gegebenenfalls auch das Verfallsdatum auf die Gefäße aufzubringen. In der Regel erfolgt diese Kennzeichnung durch ein- odei- zweidimensionale Strichcodes, Magnetstreifen oder sogenannte RF-ID-Chips.

Flüssigreagenzien im Sinne der vorliegenden Erfindung sind sämtliche Flüssigkeiten, die direkt oder indirekt an der Analyse beteiligt sind. Dies sind insbesondere Flüssigkeiten, die mit Proben in einer vorbestimmten Weise reagieren, es sind-jedoch auch solche Flüssigkeiten umfaßt, die zur Kalibrierung des Analyseautomaten dienen. Ebenfalls sollen Spül- und sonstige Hilfsflüssigkeiten mit umfaßt sein.

Unter Gefäßen im Sinne der Erfindung sind offene und geschlossene Behältnisse zu verstehen, die zur Aufnahme von Flüssigkeit dienen. Die Gefäße besitzen vorzugsweise die Form von Zylindern mit rundem, viereckigem, trapezförmigem oder rechteckigem Querschnitt. Die Gefäße besitzen einen Vorratsbereich, in dem sich die Flüssigkeit befindet, einen Haltebereich, der in Zusammenwirkung mit der Aufsteckplatte zur Halterung, des Gefäßes dient. Die Gefäße besitzen ebenfalls einen Verschlußbereich. Als Verschluß können im Stand der Technik bekannte Vorrichtungen Verwendung finden. Dies sind beispielsweise Klappdeckel, Schraubverschlüsse und Stopfen. Insbesondere die in der deutschen Patentanmeldung DE 44 19 116 beschriebenen Klappdeckel sind für den Einsatz in erfindungsgemäßen Verpackungssystemen vorteilhaft. Auf die genannte deutsche Patentanmeldung wird hiermit vollinhaltlich Bezug genommen.

Der Vorratsbereich der Gefäße besitzt in der Regel eine zylindrische Gestalt mit rundem, quadratischem, trapezförmigem oder rechteckigem Querschnitt. Für spezielle Anwendungen sind ebenfalls Haltebereiche vorteilhaft, bei denen sich äußere Form und innere Form des Gefäßes unterscheiden. Erfindungsgemäß ist es für einige Anwendungen vorteilhaft, wenn die äußere Wandung des Vorratsbereiches ein Zylinder mit quadratischer Grundfläche ist, während der innere Vorratsraum ein Zylinder mit runder Grundfläche ist. Auf diese Weise kann auch für geringe Füllvolumina gewährleistet werden, daß das Gefäß eine genügende Größe besitzt, um eine leichte Handhabbarkeit zu gewährleisten. Allgemein sind ebene Flächen an der Außenseite des Vorratsbereiches bevorzugt, da Kennzeichnungen wie Barcodes leichter auf sie aufgebracht und auch abgelesen werden können.

Erfindungsgemäß ist es bevorzugt, wenn für das Verpackungssystem Gefäße mit gleicher Außengestalt verwendet werden. Eine solche Standardisierung ermöglicht die Vereinfachung sowohl von Produktionsabläufen als auch starke Vereinfachungen bei einem automatischen Handling der Gefäße innerhalb eines Analyseautomaten. Für eine Handhabung der Gefäße beim Befüllen und Transport sind runde oder quadratische Querschnitte der Gefäße bevorzugt, da bei diesen keine Ausrichtung der Gefäße notwendig ist. Ebenfalls ist es von Vorteil, wenn die Ausnehmungen einer Aufsteckplatte den gleichen oder zumindest in etwa den gleichen Querschnitt aufweisen, so daß jedes der Gefäße mit seinem Haltebereich in jede Ausnehmung der Aufsteckplatte eingefügt werden kann.

Die Zusammenfügung der Gefäße für Flüssigreagenzien erfolgt erfindungsgemäß durch eine Aufsteckplatte. Die Aufsteckplatte besitzt eine oder mehrere, bevorzugt zwei oder drei Ausnehmungen, die in Größe und Form im wesentlichen dem Querschnitt von Haltebereichen der Gefäße entsprechen. Bevorzugt sind Ausnehmungen, die im wesentlichen einen rechteckigen Querschnitt aufweisen. Die Größe der Ausnehmungen liegt in der Regel in der Größe von wenigen Zentimetern. Die Ausnehmungen besitzen vorzugsweise kleinere Flächenanteile, die die Symmetrie der Ausnehmung reduzieren. Beispielsweise kann eine Ausnehmung einen rechteckigen Querschnitt aufweisen, der als zusätzliches Flächenelement eine Lasche besitzt. Besitzt der Haltebereich eines Gefäßes den gleichen Querschnitt, so kann die Aufsteckplatte nur in einer Orientierung auf den Haltebereich aufgepreßt werden. Dies gewährleistet eine eindeutige Orientierung der Gefäße zueinander und zur Aufsteckplatte. Die Ausnehmungen können beispielsweise auch einen trapezförmigen oder ovalen Querschnitt besitzen, um eine gewünschte Orientierung von Gefäßen und Aufsteckplatte zueinander zu gewährleisten.

Als vorteilhaft hat sich ebenfalls ein Verpackungssystem erwiesen, bei dem die Aufsteckplatte Ausnehmungen aufweist, deren Querschnittsfläche eine C₂-Achse senkrecht zur Querschnittsfläche besitzt. Dies kann zum Beispiel durch eine rechteckige Ausnehmung oder eine quadratische Ausnehmung mit zwei gegenüberliegenden Laschen realisiert werden. Besitzen die Haltebereiche der Gefäße entsprechend einen rechteckigen Querschnitt oder einen quadratischen Querschnitt mit einer oder zwei Ausnehmungen für die Laschen, so können die Gefäße in zwei Positionen mit der Aufsteckplatte verbunden werden. Diese Positionen gehen durch Drehung des Gefäßes um seine Längsachse auseinander hervor. Der Fachmann kann aufgrund dieser Informationen eine Vielzahl von Möglichkeiten für den Querschnitt von Ausnehmungen der Aufsteckplatte bzw. für die Querschnitte der Haltebereiche angeben, die die gleiche Funkion erfüllen.

Die Konstruktion der Aufsteckplatte kann vorteilhaft so gewählt werden, daß die Randbereiche der Ausnehmungen und gegebenenfalls auch der äußere Rand der Aufsteckplatte verdickt sind. Dies erhöht die mechanische Stabilität der Aufsteckplatte bei geringerem Materialbedarf. Materialverdickungen am Rand der Ausnehmungen vergrößern weiterhin die aneinander anliegenden Flächen von Haltebereichen der Gefäße und Aufsteckplatte. Dies erhöht die Stabilität eines erfindungsgemäßen Verpackungssystems.

Die Aufsteckplatte kann ebenfalls Führungselemente besitzen, welche die Positionierung und/oder den Transport eines erfindungsgemäßen Verpackungssystems innerhalb eines Analyseautomaten ermöglichen. Diese Führungselemente können beispielsweise zusätzliche Ausnehmungen in der Aufsteckplatte sein. Es ist auch möglich, an der Aufsteckplatte Vorsprünge, Stege oder dergleichen vorzusehen.

Als Materialien für das Gefäß und die Aufsteckplatte sind insbesondere Kunststoffe wie Polyethylen, Poylpropylen, Polystyrol und Polymethylmethacrylat geeignet. Es ist jedoch auch möglich. die Aufsteckplatte aus Metallen zu fertigen. Gegebenenfalls können auch Gemische dieser Kunststoffe und dem Fachmann bekannte Zusatzstoffe eingesetzt werden, die zur Erhöhung der Festigkeit, Steifigkeit oder Ebenheit beitragen. Für den Vorratsbereich des Gefäßes bietet sich außer Kunststoff insbesondere Glas an. Für den Verschluß- und Haltebereich sind infolge der höheren mechanischen Beanspruchung insbesondere höherwertige Kunststoffe geeignet. Bei Verschlüssen mit Filmscharnier sind insbesondere die Kunststoffe Polyethylen und Polypropylen geeignet.

Gefäße zur Verwendung in einem erfindungsgemäßen Verpackungssystem können ein-, zwei- oder mehrteilig aufgebaut sein. Insbesondere sind solche Gefäße bevorzugt, bei denen eine Einheit aus Verschluß- und Haltebereich auf einen Vorratsbereich aufgesteckt wird.

Der Haltebereich besitzt konstruktive Elemente, die an die Aufsteckplatte angepaßt sind, so daß eine Verklemmung von Aufsteckplatte und Haltebereich möglich ist.

Ein zentraler Aspekt der Erfindung liegt im Zusammenwirken von Haltebereich und Aufsteckplatte zur Halterung der Gefäße. Um diese Funktionsweise zu erreichen, sind insbesondere zwei Ausführungsformen geeignet:

Bei der ersten Ausführungsform besitzt der Haltebereich Konstruktionselemente, die gegenüber der Längsachse des Gefäßes geneigt sind. Diese Konstruktionselemente können beispielsweise Flächen oder Stege sein. Aufgrund dieser Konstruktionselemente variiert der Querschnitt des Haltebereiches. In einem ersten Bereich ist der Querschnitt des Haltebereiches kleiner als der lichte Querschnitt der Ausnehmung in der Aufsteckplatte. In einem anderen Bereich besitzt der Haltebereich einen Querschnitt, welcher der lichten Weite der Ausnehmung entspricht oder über diese hinausgeht. Wird die Aufsteckplatte auf die Seite des Haltebereiches aufgepreßt, die einen kleineren Querschnitt besitzt, und in Richtung des größeren Querschnittes bewegt, so findet ein Verklemmen von Aufsteckplatte und Haltebereich statt. Werden als Konstruktionselemente Stege eingesetzt, so sind Querschnitt von Haltebereich und Querschnitt der Ausnehmung im wesentlichen identisch. Die Stege verlaufen so, daß sie auf der einen Seite mit der Umfangsfläche des Haltebereiches fluchten und über die Breite des Haltebereiches ansteigen, sodaß sie sich an dem anderen Ende des Haltebereiches um wenige Millimeter über die äußere Umfangsfläche des Haltebereiches erheben. Sind Aufsteckplatte und Gefäß erfindungsgemäß miteinander verbunden, so sind Stege und Aufsteckplatte miteinander verklemmt. Auf diese Weise kann eine spielfreie Verbindung auch dann erreicht werden, wenn die Fügepartner Aufsteckplatte und Haltebereich Fertigungstoleranzen aufweisen.

Bei einer zweiten Ausführungsform sind an der dem Verschluß zugewandten Seite des Haltebereiches eine oder mehrere Rampen angeordnet. Die Rampen fluchten an einer Seite mit der Umfangsfläche und erheben sich an der gegenüberliegenden Seite um wenige Millimeter aus der Umfangsfläche. Wird die Aufsteckplatte über den Verschluß eines Gefäßes hinweggeführt und auf den Haltebereich zubewegt, so ist es mit relativ geringem Kraftaufwand möglich, die Aufsteckplatte über die Rampen hinwegzubewegen. Nach Überwinden der Rampen gelangt die Aufsteckplatte in eine Rastposition, aus der sie aufgrund der steil ansteigenden Seiten der Rampen nur unter größerem Kraftaufwand wegbewegt werden kann. Vorteilhaft ist der Haltebereich auf der den Rampen gegenüberliegenden Seite durch einen Materialvorsprung begrenzt. In der Rastposition befindet sich die Aufsteckplatte demnach zwischen dem Materialvorsprung und den Rampen.

Eine besonders bevorzugte Ausführungsform des Haltebereiches ergibt sich, wenn die oben genannten Ausführungsformen miteinander kombiniert werden.

Ein erfindungsgemäßes Verpackungssystem besitzt gemäß den obigen Ausführungen den Vorteil, daß es eine bequeme und materialsparende Zusammenführung von Gefäßen ermöglicht. Ein erfindungsgemäßes Verpackungssystem ist weiterhin platzsparend und ermöglicht somit eine Verkleinerung von Analyseautomaten, in denen es eingesetzt wird.

Das erfindungsgemäße Verpackungssystem weist ebenfalls den Vorteil auf, daß es eine definierte Orientierung der Reagenzgefäße zueinander und relativ zur Aufsteckplatte gewährleistet. Von besonderer Bedeutung ist es ferner, daß mit dem erfindungsgemäßen System eine exakte Positionierung der Flaschenmündungen bzw. der Verschlüsse möglich ist. Außerdem ist es von Vorteil, daß weite Bereiche der Gefäße von außen zugänglich sind, so daß Markierungen auf den Gefäßen abgelesen werden können.

Eine weitere günstige Eigenschaft des Systems ist es, daß eine Verbindung von Gefäßen und Aufsteckplatte wieder gelöst werden kann. Dies ermöglicht es beispielsweise Gefäße in neuen Kombinationen zusammenzufügen oder einzelne Gefäße einer Anordnung auszutauschen. Der Austausch von Gefäßen ist mit erfindungsgemäßem Verpackungssystem mit sehr geringem Aufwand und auch schnell möglich. In der Praxis wird es oftmals gewünscht, daß eine vom Hersteller oder Kunden zusammengefügte Anordnung nicht ohne weiteres verändert werden kann. Für diesen Fall können die Rastelemente, welche die Aufsteckplatte auf dem Haltebereich haltern, so ausgelegt werden, daß das Entfernen eines Gefäßes aus der Anordnung nur unter größerem Kraftaufwand möglich ist.

Die Erfindung wird anhand der folgenden Figuren näher erläutert.
- Figur 1:: Einheit aus Verschlußbereich und Haltebereich.
- Figur 2:: Aufsteckplatten
- Figur 3:: Explosionszeichnung eines Verpackungssystems
- Figur 4:: Ausführungsformen für Aufsteckplatten in Aufsicht
- Figur 5:: System von Aufsteckplatte und Gefäß, mit dem zweit Positionen jedes Gefäßes innerhalb einer Ausnehmung möglich sind

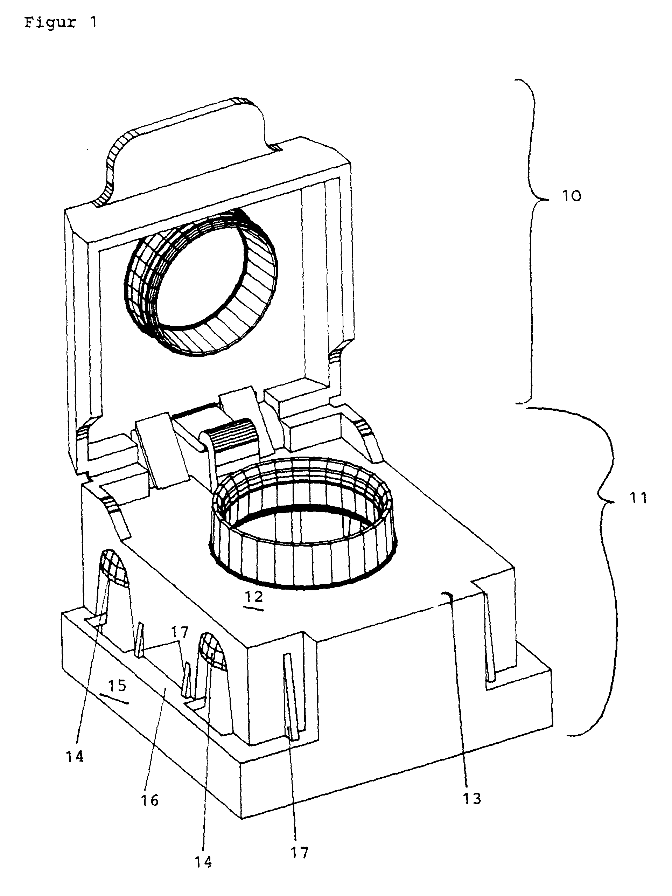

Figur 1 zeigt eine Einheit aus einem Verschlußbereich (10) und einem Haltebereich (11). Diese Einheit kann auf den Vorratsbereich eines Gefäßes aufgesteckt werden und ergibt dann ein verschließbares Gefäß mit Haltebereich. Der in Figur 1 dargestellte Haltebereich (11) besitzt im oberen Teil einen Sockel (12), der im Querschnitt eine rechteckige Gestalt hat, an die sich eine Lasche (13) anschließt. An gegenüberliegenden Seitenwänden des Sockels befinden sich jeweils zwei Rampen (14), die sich aus der Seitenfläche des Sockels (12) erheben. Im unteren Teil des Haltebereiches (11) befindet sich ein zweiter Sockel (15), der ebenfalls einen rechteckigen Querschnitt aufweist, der größer als der von Sockel (12) ist. Dadurch ergibt sich ein Materialvorsprung (16).

In Figur 1 sind weiterhin Stege (17) zu erkennen, deren Außenflächen gegenüber der Längsachse des Gefäßes geneigt sind. An der oberen Seite des Haltebereiches befindet sich die Außenwand der Stege (17) in einer Ebene mit dem Sockel (12). Zur Unterseite des Haltebereiches hin treten die Stege aus dem Sockel (12) heraus.

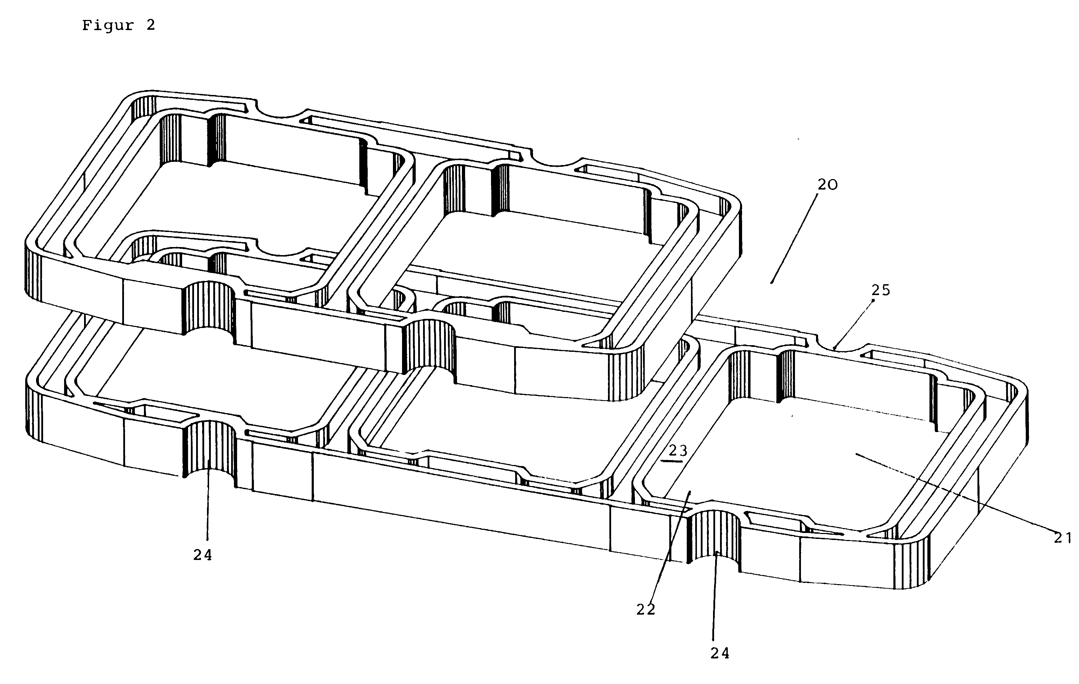

Figur 2 zeigt eine Aufsteckplatte (20) mit zwei Ausnehmungen und eine Aufsteckplatte mit drei Ausnehmungen. Bei beiden Aufsteckplatten ist zu erkennen, daß die Außenkanten und die der Ausnehmung zugewandten Kanten gegenüber der Basisfläche der Aufsteckplatte verdickt sind. An der Ausnehmung (21) ist zu erkennen, daß ihre Form dem oberen Sockel (12) des Haltebereiches entspricht. Das heißt, die Ausnehmung (21) besitzt einen rechteckigen Querschnitt, an den sich auf der einen Seite ein Flächenelement (22) anschließt, in die sich die Lasche (13) einpaßt, wenn die Aufsteckplatte (20) auf den Haltebereich (11) aufgeschoben wird. Die Randfläche (23) der Ausnehmung (21) besitzt eine Dicke, die dem Abstand zwischen dem Materialvorsprung (16) und der Unterkante der Rampe (14) entspricht. Die Aufsteckplatte (20) besitzt weiterhin Führungselemente (24, 25) an ihrer Vorder- und Rückseite. Im gegebenen Fall sind die Führungselemente halbkreisförmige Ausnehmungen. Wird ein erfindungsgemäßes Verpackungssystem in einem Analyseautomaten verwendet, so können z. B. Stäbe des Analyseautomaten in die Führungselemente (24, 25) eingreifen und zu einer Positionierung des Verpackungssystems dienen. Die Führungselemente (24) an der Vorderseite besitzen zueinander einen anderen Abstand als die Führungselemente (25) an der Rückseite. Auf diese Weise kann zwischen Vorder- und Rückseite des Verpackungssystems unterschieden werden, was eine eindeutige Orientierung des Verpackungssystems im Analyseautomaten ermöglicht.

Anhand der Figuren 1 und 2 wird die Verbindung von Aufsteckplatte (20) und Haltebereich (11) näher erläutert.

Zum Zusammenstecken von Aufsteckplatte (20) und einem Gefäß wird die Ausnehmung (21) von der Oberseite auf den Haltebereich (11) aufgesteckt. Befindet sich die Randfläche (23) jenseits der Rampen (14), so wird eine Weiterbewegung durch den Vorsprung (16) verhindert. Die Rampe (14) verhindert ihrerseits, daß die Aufsteckplatte (20) von dem Haltebereich abrutscht. Mit einem hinreichenden Kraftaufwand können jedoch Haltebereich (11) und Aufsteckplatte (20) durch Abziehen der Aufsteckplatte voneinander getrennt werden. Bei dem Aufstecken der Aufsteckplatte (20) auf den Haltebereich (11) bewirken die Stege (17) eine Verklemmung von Aufsteckplatte und Haltebereich, was zu einer zusätzlichen Stabilisierung der Verbindung führt.

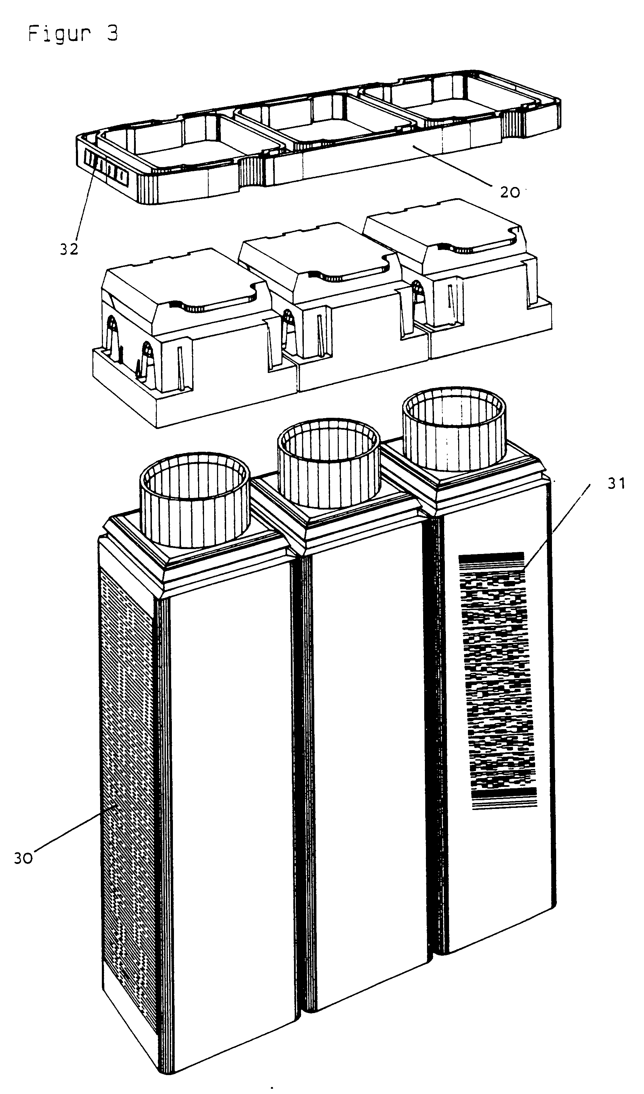

Figur 3 zeigt eine Explosionsdarstellung eines erfindungsgemäßen Verpackungssystems. Zum Zusammenfügen des Systems wird zunächst die Einheit aus Verschlußbereich und Haltebereich auf die Vorratsgefäße (30) aufgesteckt. In einem Folgeschritt wird die Aufsteckplatte (20) auf die Haltebereiche aufgepreßt. Wie aus der Zeichnung zu entnehmen, sind die Gefäße nebeneinander angeordnet. Durch das Zusammenwirken von Aufsteckplatte und Haltebereichen wird erreicht, daß die Gefäße die gleiche Orientierung besitzen.

In Figur 3 sind ebenfalls Strichcode-Etiketten (31) auf den Vorratsgefäßen (30) dargestellt. Durch das Verpackungssystem kann gewährleistet werden, daß die Strichcode-Etiketten (31) auf einer Seite des Systems angeordnet sind und daß sie für die Ablesung durch einen Strichcodeleser innerhalb eines Analyseautomaten geeignet positioniert sind. Während die Strichcodes (31) gefäßspezifische Informationen tragen, kann auf der Aufsteckplatte ein Strichcode-Etikett (32) angebracht sein, das Informationen trägt, die für das Verpackungssystem charakteristisch sind. Das Etikett (32) kann beispielsweise auch Informationen enthalten, welche verschiedenen Gefäße durch die Aufsteckplatte zu einem Verpackungssystem zusammengefügt werden sollen. Dies ermöglicht beispielsweise eine maschinelle Zusammenfügung von einzelnen Gefäßen zu einem erfindungsgemäßen Verpackungssystem.

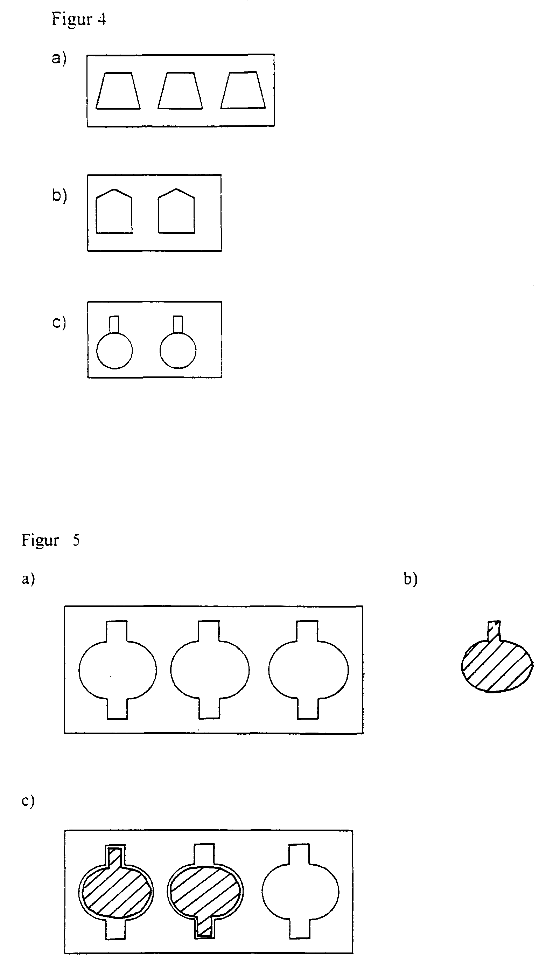

Figur 4 zeigt drei verschiedene Ausführungsformen für Aufsteckplatten in Aufsicht. In Figur 4 a besitzen die Ausnehmungen der Aufsteckplatte einen trapezförmigen Querschnitt. Die Figuren 4 b und 4 c zeigen Aufsteckplatten mit fünfeckigem Querschnitt und mit rundem Querschnitt mit angesetzter Lasche. Die dargestellten Aufsteckplatten zeigen beispielhaft, wie durch Wahl des Querschnittes der Ausnehmungen und damit auch des Querschnittes der Haltebereiche eine eindeutige Orientierung der Gefäße zueinander und innerhalb der Aufsteckplatte erreicht werden kann.

In Figur 5 a ist eine Aufsteckplatte dargestellt, deren Ausnehmungen kreisförmig sind und zwei zusätzliche Laschen aufweisen. Das in Figur 5 b in Aufsicht dargestellte Gefäß kann in zwei verschiedenen Positionen, die in Figur 5 c dargestellt sind, mit der Aufsteckplatte verbunden werden. Die beiden in Figur 5 c dargestellten Positionen des Gefäßes gehen durch eine 180 °-Drehung des Gefäßes um seine Längsachse auseinander hervor. Diese Ausführungsform kann insbesondere dann von Vorteil sein, wenn auf dem Gefäß zwei Informationsträger angebracht sind, die in einer Analyseapparatur jedoch nur von einer Seite gelesen werden können. Durch ein gezieltes Einstecken der Gefäße in die Aufsteckplatte kann somit gesteuert werden, welcher Informationsträger gelesen wird.

### Bezugszeichenliste

- (10): Verschlußbereich
- (11): Haltebereich
- (12): Sockel
- (13): Lasche
- (14): Rampen
- (15): zweiter Sockel
- (16): Materialvorsprung
- (17): Stege
- (20): Aufsteckplatte
- (21): Ausnehmung
- (22): Flächenelement
- (23): Randfläche der Ausnehmung
- (24, 25): Führungselemente
- (30): Vorratsgefäß
- (31): Strichcode-Etikett auf Vorratsgefäß
- (32): Strichcode-Etikett auf Aufsteckplatte

## Patentansprüche

1. Verpackungssystem für Flüssigreagenzien, beinhaltend
ein oder mehrere Gefäße mit einem Haltebereich (11) sowie einen Verschlußbereich (10) und
eine Aufsteckplatte (20) mit einer der Zahl der Gefäße entsprechenden Zahl von Ausnehmungen (21),
wobei die Ausnehmungen in der Aufsteckplatte in Größe und Form im wesentlichen dem Querschnitt der Haltebereiche entsprechen, so daß eine eindeutige Orientierung der Gefäße zueinander und zur Aufsteckplatte gewährleistet ist.

2. Verpackungssystem gemäß Anspruch 1, bei dem die Haltebereiche Konstruktionselemente besitzen, die gegenüber der Längsachse des Gefäßes geneigt sind und beim Aufpressen der Aufsteckplatte auf das Gefäß eine Verklemmung von Aufsteckplatte und Haltebereich erfolgt.

3. Verpackungssystem gemäß Anspruch 2, bei dem die gegenüber der Längsachse des Gefäßes geneigten Konstruktionselemente Flächen oder Stege (17) sind.

4. Verpackungssystem gemäß Anspruch 1, bei dem sich an den Haltebereich (11) der Gefäße ein Vorsprung (16) anschließt, der eine Bewegung der Aufsteckplatte über den Haltebereich hinaus verhindert.

5. Verpackungssystem gemäß Anspruch 1 oder 2, bei dem sich an dem Haltebereich (11) ein oder mehrere Rampen (14) befinden, die sich aus der Umfangsfläche des Haltebereiches (11) heraus erheben, und über die eine Ausnehmung (21) der Aufsteckplatte (20) in einer Richtung hinwegbewegt werden kann und die Rampe nach ihrem Überschreiten einen mechanischen Widerstand für eine Zurückbewegung der Aufsteckplatte darstellt.

6. Verpackungssystem gemäß Anspruch 1, bei dem die eine oder mehreren Ausnehmungen (21) der Aufsteckplatte (20) einen im wesentlichen rechteckigen Querschnitt besitzen.

7. Verpackungssystem gemäß Anspruch 1, bei dem die eine oder mehreren Ausnehmungen (21) einen im wesentlichen rechteckigen oder runden Querschnitt besitzen, der mindestens ein zusätzliches Strukturelement besitzt, das die Rotationssymmetrie senkrecht zur Ausnehmung so reduziert, daß Aufsteckplatte und Gefäße nur in einer Orientierung zusammengefügt werden können.

8. Verpackungssystem gemäß Anspruch 1, bei dem die Aufsteckplatte (20) Führungselemente (24) besitzt, die eine eindeutige Positionierung des Verpackungssystems in einem Analyseautomaten ermöglichen.

9. Verpackungssystem gemäß Anspruch 1, bei dem die Aufsteckplatte (20) Ausnehmungen (21) aufweist und die Haltebereiche (11) der Gefäße so mit den Ausnehmungen (21) fluchten, daß jedes Gefäß in zwei verschiedene Positionen, die durch Drehung des Gefäßes um seine Längsachse auseinander hervorgehen, mit der Aufsteckplatte verbunden werden kann.

10. Verpackungssystem gemäß Anspruch 1, bei dem die Ausnehmungen (21) der Aufsteckplatte einen im wesentlichen identischen Querschnitt in Größe und Form besitzen.

11. Verpackungssystem gemäß Anspruch 1, bei dem die Aufsteckplatte (20) ein Strichcode-Etikett (32) trägt.

12. Verpackungssystem gemäß Anspruch 1, bei dem auf den ein oder mehreren Gefäßen Strichcode-Etiketten (31) angebracht sind.

## Claims

1. Packaging system for liquid reagents comprising
one or several vessels with a holding area (11) and a closure area (10) and
a plug-on plate (20) with a number of apertures (21) that corresponds to the number of vessels,
wherein the size and shape of the apertures in the plug-on plate essentially corresponds to the cross-section of the holding areas to ensure a defined orientation of the vessels relative to one another and to the plug-on plate.

2. Packaging system as claimed in claim 1, in which the holding areas have constructional elements which are inclined relative to the longitudinal axis of the vessel and lock together the plug-on plate and holding area when the plug-on plate is pressed onto the vessel.

3. Packaging system as claimed in claim 2, in which the constructional elements that are inclined relative to the longitudinal axis of the vessel are surfaces or bars (17).

4. Packaging system as claimed in claim 1, in which a projection (16) adjoins the holding area (11) of the vessels which prevents the plug-on plate from moving beyond the holding area.

5. Packaging system as claimed in claim 1 or 2, in which one or several ramps (14) are located on the holding area (11) which rise above the peripheral surface of the holding area (11) and over which an aperture (21) of the plug-on plate (20) can be moved in one direction and, after it has been crossed, the ramp represents a mechanical resistance to a backward movement of the plug-on plate.

6. Packaging system as claimed in claim 1, wherein one or several apertures (21) of the plug-on plate (20) have an essentially rectangular cross-section.

7. Packaging system as claimed in claim 1, wherein one or several apertures (21) have an essentially rectangular or round cross-section which has at least one additional structural element that reduces the rotational symmetry perpendicular to the aperture in such a manner that the plug-on plate and vessels can only be joined together in one orientation.

8. Packaging system as claimed in claim 1, wherein the plug-on plate (20) has guide elements (24) which enable a defined orientation of the packaging system in an automated analyser.

9. Packaging system as claimed in claim 1, wherein the plug-on plate (20) has apertures (21) and the holding areas (11) of the vessels are aligned with the apertures (21) in such a manner that each vessel can be joined to the plug-on plate in two different positions that result from rotating the vessel around its longitudinal axis.

10. Packaging system as claimed in claim 1, wherein the apertures (21) of the plug-on plate have an essentially identical cross-sectional size and shape.

11. Packaging system as claimed in claim 1, wherein the plug-on plate (20) has a bar code label (32).

12. Packaging system as claimed in claim 1, wherein bar code labels (31) are attached to the one or several vessels.

## Revendications

1. Système d'emballage pour réactifs liquides, contenant:
un ou plusieurs récipients présentant une zone de retenue (11) ainsi qu'une zone de fermeture (10), et
une plaque d'enfichage (20) présentant un nombre de logements (21) qui correspond au nombre de récipients,
les logements de la plaque d'enfichage correspondant en taille et en forme essentiellement à la section transversale des zones de retenue, de manière à assurer une orientation univoque des récipients l'un par rapport à l'autre et par rapport à la plaque d'affichage.

2. Système d'emballage selon la revendication 1, dans laquelle les zones de retenue possèdent des éléments structurels qui sont inclinés par rapport à l'axe longitudinal du récipient et qui, lorsque la plaque d'enfichage est repoussée contre le récipient, ont pour effet un serrage entre la plaque d'enfichage et la zone de retenue.

3. Système d'emballage selon la revendication 2, dans lequel les éléments structurels inclinés par rapport à l'axe longitudinal des récipients sont des surfaces ou des traverses (17).

4. Système d'emballage selon la revendication 1, dans lequel une saillie (16) qui empêche un déplacement de la plaque d'enfichage hors de la zone de retenue des récipients se raccorde à la zone de retenue (11) des récipients.

5. Système d'emballage selon la revendication 1 ou 2, dans lequel sur la zone de retenue (11) se trouvent une ou plusieurs rampes (14) qui débordent de la surface périphérique et de la zone de retenue (11) et par lesquelles un évidement (21) de la plaque d'enfichage (20) peut être écarté dans une direction, et après avoir été dépassée, la rampe constitue une résistance mécanique pour le déplacement de retour de la plaque d'enfichage.

6. Système d'emballage selon la revendication 1, dans lequel un ou plusieurs logements (21) de la plaque d'enfichage (20) possèdent une section transversale essentiellement rectangulaire.

7. Système d'emballage selon la revendication 1, dans lequel un ou plusieurs logements (21) possèdent une section transversale essentiellement rectangulaire ou ronde, et possèdent un élément structurel supplémentaire qui réduit la symétrie de rotation perpendiculairement au logement de telle sorte que la plaque d'enfichage et les récipients ne peuvent être assemblés que dans une orientation.

8. Système d'emballage selon la revendication 1, dans lequel la plaque d'enfichage (20) possède des éléments de guidage (24) qui permettent un positionnement univoque du système d'emballage dans un automate d'analyse.

9. Système d'emballage selon la revendication 1, dans lequel la plaque d'enfichage (20) présente des logements (21) et les zones de retenue (11) des récipients sont alignées sur les logements (21) de telle sorte que chaque récipient peut être relié à la plaque d'enfichage en deux positions différentes, une rotation du récipient autour de son axe longitudinal permettant de passer de l'une à l'autre de ces positions.

10. Système d'emballage selon la revendication 1, dans lequel les logements (21) de la plaque d'enfichage présentent tous une section transversale essentiellement identique en taille et en forme.

11. Système d'emballage selon la revendication 1, dans lequel la plaque d'enfichage (20) porte une étiquette (32) à code à barres.

12. Système d'emballage selon la revendication 1, dans lequel des étiquettes (31) à code à barres sont appliquées sur le ou les récipients.
